# EUROPEAN PATENT APPLICATION

(11) **EP 1 274 233 A1**
(43) Date of publication of application: **08.01.2003**
(21) Application number: 01305669.2
(22) Date of filing: 29.06.2001
(51) Int. Cl.: H04N 5/445, G06F 17/30

(54) **Internet browser as part of a broadcast data receiver**

(71) Applicant: Pace Micro Technology PLC, Shipley, West Yorkshire BD18 3LF (GB)
(72) Inventor: Moir, Mark, Cambridge CB5 9QF (GB)
(74) Representative: Wood, Graham

(57) **Abstract**

The invention relates to the provision of an internet capability as a function of a broadcast data receiver included in or connected to a display screen as part of a television set. The display screen of the television set is used to display a series of user selected internet window display but can only display one internet window at a time, typically of a page from a website, at a time. However several window displays can be open and available for user selection for display at any time. In accordance with the invention an information display is generated and displayed on screen which allows information identifying each of the display windows available for user selection to be shown to the user and, in one embodiment, selected from the display screen using the broadcast data receiver remote control facility.

## Description

The invention to which this application relates is to the provision of an internet browser capability, provided as part of a broadcast data receiver apparatus, typically, but not necessarily exclusively, connected to or formed as part of a television set, through the screen of which the use of the browser can be controlled and displayed to the viewer.

When using an internet browser it is well known to utilise a number of "windows" which can be simultaneously displayed on portions of the screen. A window is typically a portion of the screen which is defined and displays subject matter relating to a particular web site or web site page of data. A number of said windows can be open at one time, either fully or partially positioned over other windows. The user can then select which of the windows is to be live and navigable at any instant.

With personal computer (PC) apparatus with a web browser running, the user is able to have multiple windows open which show various web pages at the same time. The user is able to see the different windows at once by resizing the pages to fit alongside each other, or to have them stacked on top of each other as discussed above. In any case the user can select which of the windows they want to read by clicking on the title bar of the window or clicking on the window's icon on the icon bar at the bottom of the screen. This brings the window to the top of the stack to be the "live" window.

However this ordering and selection of windows cannot be achieved when the internet browser is provided as part of the broadcast data receiver and the television screen is used to display the windows due to problems with resolution and so there is no easy way to switch between or manage multiple windows in the same manner as with PC apparatus. The use of the television screen to display the internet windows has therefore created significant and specific problems as the user environment is very different. There is no icon display bar as in the PC apparatus which can be used as a short cut to allow the selection of specific windows or functions and, furthermore the user has no title bars to select or a pointer in the traditional sense. This has therefore conventionally made the use and selection of different parts of information display to be difficult and has meant that the use of internet browsers via broadcast data receivers has largely been a single tasking interface where all web browsing is done in a single main window which is displayed. This tends to limit the adaptability and speed of use of the facility.

There is now however the facility for the internet browser provided with broadcast data receivers to have multiple windows, each containing an internet site page. This therefore offers the user the opportunity of achieving the user the same functionality as they can obtain from a PC. However, the service in the broadcast data receiver still has no pointer or means of selecting between multiple displayed windows or the use of a standard icon bar for multiple window navigation and this again limits the functionality of the service.

The aim of the present invention is to provide a system for incorporation in a broadcast data receiver and internet browser service provided therein which allows the selection of one of a plurality of windows at any one time.

In a first aspect of the invention there is provided An internet capability provided as a user selectable function of a broadcast data receiver, said capability allowing the opening and retention of at least two window displays of internet data and allowing the user selective display of one of the windows on a display screen connected to the broadcast data receiver at any one time, each window display displaying a page from a user selected internet site and characterised in that when a window display is generated in response to a user selection, information data relating to that window is entered into an information display viewable on the display screen and information is added to the information display for each window display which is generated and available for viewing.

Thus the invention provides an internet browser capability as part of a broadcast data receiver, said capability allowing the opening and retention of at least two windows of data, each displaying a page from an internet site, to be displayed via a display screen and wherein, upon the opening of a window an information display is generated which includes at least one selectable function for the specific window, and said process is repeated for each subsequently opened window.

Typically, due to the display constraints of the television screen which will be commonly used, only one window will be displayed across the majority of the screen at any one time, however the information displays for each of the windows which are selectable, remain viewable until the particular window is closed.

In one embodiment the window information display includes the display of a title for the material displayed, an option to activate or select to view that window which will then cause the window to be displayed across the screen, and an option to close the window. When the close option is selected, the window is no longer viewable or selectable and the information display for that window is deleted.

Thus the invention provides the user with a continual on-screen indication of the number of browser windows that are open at any time and to allow them to manage those windows easily. In a system where there are many browser windows "open", the user can easily forget the number that are open especially when a link on a web page may, unknowingly to the user, open more than one window (adverts for example). Because the browser would open all windows full screen, the user would not otherwise know this.

Typically the window display selected for display is displayed across the entire display screen with the exception of the information display.

In one embodiment the information display stretches across the length of the display screen and is split into sections, each section indicating a particular window display available for viewing. Typically the length of each section decreases as the number of available window displays increases. Thus for example, when there are two window displays available, In one embodiment the information display for each window is approximately half a screen in length and relatively narrow so as to allow the display of the information without taking up valuable screen space.

In a further aspect of the invention there is provided a broadcast data receiver for the reception of data broadcast from a remote location and the processing of the same to allow the generation of user selectable television programmes displayed via a television set connected to or provided with the broadcast data receiver, said broadcast data receiver interactive with a user via a remote control, and including as a user selectable additional function, an internet capability, said capability controlled by the user via the remote control device and each window display generated from the internet capability is required to be displayed across the display screen of the television set with one window display shown at a time and characterised in that an information display is also shown on the display screen during the use of the internet capability, said information display generated to indicate information identifying each of the window displays which are live and available for viewing at that time, regardless of whether or not the window display is being displayed on the display screen at that time.

Typically the information display includes an indicator to indicate which of the window displays is being displayed on the screen at that instant.

Preferably, when a user selects to open a window display from the internet, information data identifying that window display is added to a memory in the broadcast data receiver and, the information data held in the memory is used by the broadcast data receiver to generate the information display at that instant. When a window display is closed by the user, the information data is removed from the memory and hence the information display.

A specific embodiment of the invention is now described with reference to the accompanying diagram which illustrates on embodiment of the display generated in accordance with the invention.

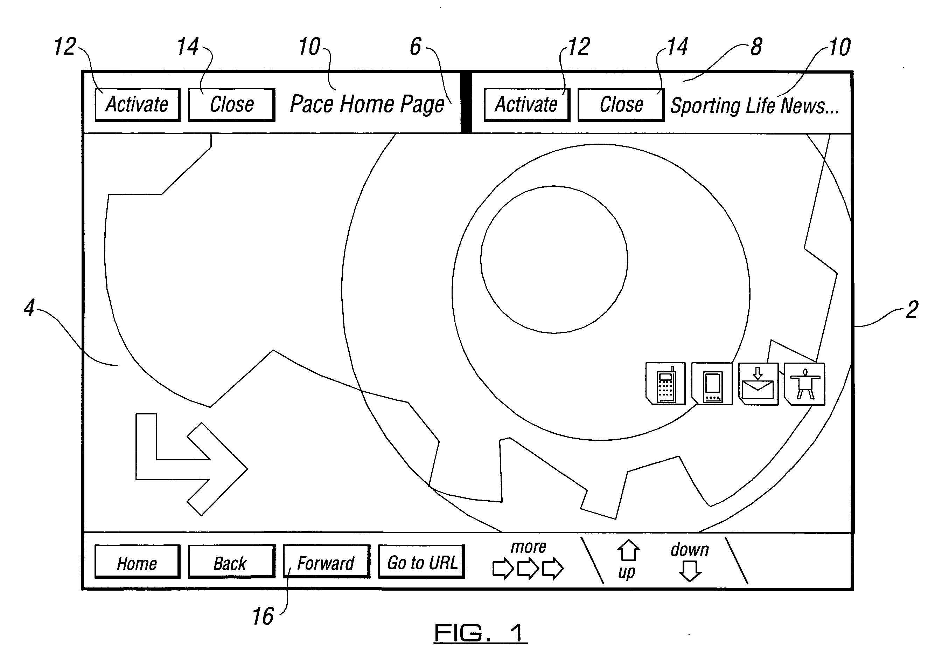

The Figure illustrates a television screen 2 with a display of a internet site window 4. In this case there are also displayed two information displays, 6,8 which immediately indicates to the user that there are two windows available for viewing, the one currently being shown and another, not shown. Each information display includes the title 10 of the window, an option to select or activate the window 12 and an option 14 to close the window. Thus, in accordance with the Figure if the user wishes to select the "sporting life news" web page they would select the activation option which would case that window to be then displayed.

If in certain instances there is only window available for viewing the information display for the single window is not shown to avoid the user from closing the only window and to stop any unnecessary screen display waste. There would be no need to have an activate button as it is the only window available.

At the bottom of the screen there is a short toolbar 16 for the user to navigate to other web pages. Typically the information display, in this case display 6, for the window being shown is highlighted or otherwise differentiated from the other information displays to indicate to the user which window is currently being displayed. The user can use standard navigation controls to highlight and select the options on the information display.

Should there be more than two browser windows, a second line of two title bars can be added under the first one as required. This would also encourage the user of a limited integrated TV type device to close any non-essential windows to reduce the amount of screen display taken up and to reduce the memory used by the extra web pages.

Thus in accordance with the invention a broadcast data receiver based multi- internet window system can be provided without the need for a full PC style desktop environment. The user can see when other browser windows are opened and can manage them easily and minimal screen space is taken up by the information displays when generated.

## Claims

1. An internet capability provided as a user selectable function of a broadcast data receiver, said capability allowing the opening and retention of at least two window displays of internet data and allowing the user selective display of one of the windows on a display screen connected to the broadcast data receiver at any one time, each window display displaying a page from a user selected internet site and **characterised in that** when a window display is generated in response to a user selection, information data relating to that window is entered into an information display viewable on the display screen and information is added to the information display for each window display which is generated and available for viewing.

2. An internet capability according to claim 1 **characterised in that** only one of the window displays can be displayed at any one time on the display screen.

3. An internet capability according to claim 1 **characterised in that** the display screen is a television screen.

4. An internet capability according to claim 1 **characterised in that** the information display is continuously displayed when the internet capability is in use via the broadcast data receiver.

5. An internet capability according to claim 4 **characterised in that** the information displays information for each of the window displays which has been opened following a user selection and is available for viewing at that instant.

6. An internet capability according to claim 1 **characterised in that** when a window display is closed by the user, the information data relating to that window is deleted from the information display.

7. An internet capability according to claim 1 **characterised in that** the information display includes the display of a title for each of the window displays available for selection.

8. An internet capability according to claim 1 **characterised in that** in addition to indicating the identity of each of the windows available for user selection, the information display is interactive and includes one or a range of options to allow user control of the window which is displayed.

9. An internet capability according to claim 8 **characterised in that** the interaction includes the option for the user to activate or select to view a window indicated on the information display which then causes the selected window to be displayed across the display screen.

10. An internet capability according to claim 8 **characterised in that** the information display includes a user selectable option to close the window.

11. An internet capability according to claim 1 **characterised in that** the window display selected for display is displayed across the entire display screen with the exception of the information display.

12. An internet capability according to claim 11 **characterised in that** the information display stretches across the length of the display screen and is split into sections, each section indicating a particular window display available for viewing.

13. An internet capability according to claim 12 **characterised in that** the length of each section decreases as the number of available window displays increases.

14. A broadcast data receiver for the reception of data broadcast from a remote location and the processing of the same to allow the generation of user selectable television programmes displayed via a television set connected to or provided with the broadcast data receiver, said broadcast data receiver interactive with a user via a remote control, and including as a user selectable additional function, an internet capability, said capability controlled by the user via the remote control device and each window display generated from the internet capability is required to be displayed across the display screen of the television set with one window display shown at a time and **characterised in that** an information display is also shown on the display screen during the use of the internet capability, said information display generated to indicate information identifying each of the window displays which are live and available for viewing at that time, regardless of whether or not the window display is being displayed on the display screen at that time.

15. A broadcast data receiver according to claim 14 **characterised in that** the information display includes an indicator to indicate which of the window displays is being displayed on the screen at that instant.

16. A broadcast data receiver according to claim 14 **characterised in that** when a user selects to open a window display from the internet, information data identifying that window display is added to a memory in the broadcast data receiver and, the information data held in the memory is used by the broadcast data receiver to generate the information display at that instant.

17. A broadcast data receiver according to claim 14 **characterised in that** when a window display is closed by the user, the information data is removed from the memory and hence the information display.
